# EUROPEAN PATENT APPLICATION

(11) **EP 1 524 496 A1**
(43) Date of publication of application: **20.04.2005**
(21) Application number: 04024000.4
(22) Date of filing: 08.10.2004
(51) Int. Cl.: G01C 15/00, G01C 9/06

(54) **Tilt detecting device**

(30) Priority: 14.10.2003 JP 2003353825
(71) Applicant: KABUSHIKI KAISHA TOPCON, Tokyo-to (JP)
(72) Inventor: Hayase, Shin-ichi, Itabashi-ku, Tokyo-to (JP); Osaragi, Kazuki, Itabashi-ku, Tokyo-to (JP); Fukuroda, Yuji, Itabashi-ku, Tokyo-to (JP)
(74) Representative: LOUIS- PÖHLAU- LOHRENTZ

(57) **Abstract**

A tilt detecting device to be installed in a system where installation position is changed, characterized in that the tilt detecting device comprising at least one bubble tube, a light emitting element having an optical axis perpendicularly crossing an axis of the bubble tube and for emitting a light beam to pass through the bubble tube, and a photodetection element for receiving the light beam passing through the bubble tube, wherein tilting is detected based on photodetecting condition of the photodetection element, and the position of the system is changed in a direction rotating around the axis of the bubble tube.

## Description

### BACKGROUND OF THE INVENTION

The present invention relates to a tilt detecting device used in a surveying instrument such as a laser surveying instrument or other system and instrument where horizontality is required when it is installed.

In a surveying instrument, e.g. in a surveying instrument which forms a horizontal reference plane by using a laser beam, it is necessary that the surveying instrument is installed at horizontal position and is operated in horizontal condition in order that the reference plane is kept in a horizontal direction.

For this reason, in a surveying instrument, a tilt detecting device is provided inside the instrument. The surveying instrument is leveled based on results detected by the tilt detecting device, and the surveying instrument is operated in horizontal condition.

When a reference plane is formed by using a laser beam, it is often required to have not only a horizontal reference plane but also a vertical reference plane. In some cases, the surveying instrument is laid by an angle of 90°and a vertical reference plane can be conveniently formed. In this case, it is necessary to have a tilt detecting device, which can detect tilting of the surveying instrument at two positions, i.e. erected position and in horizontally laid position.

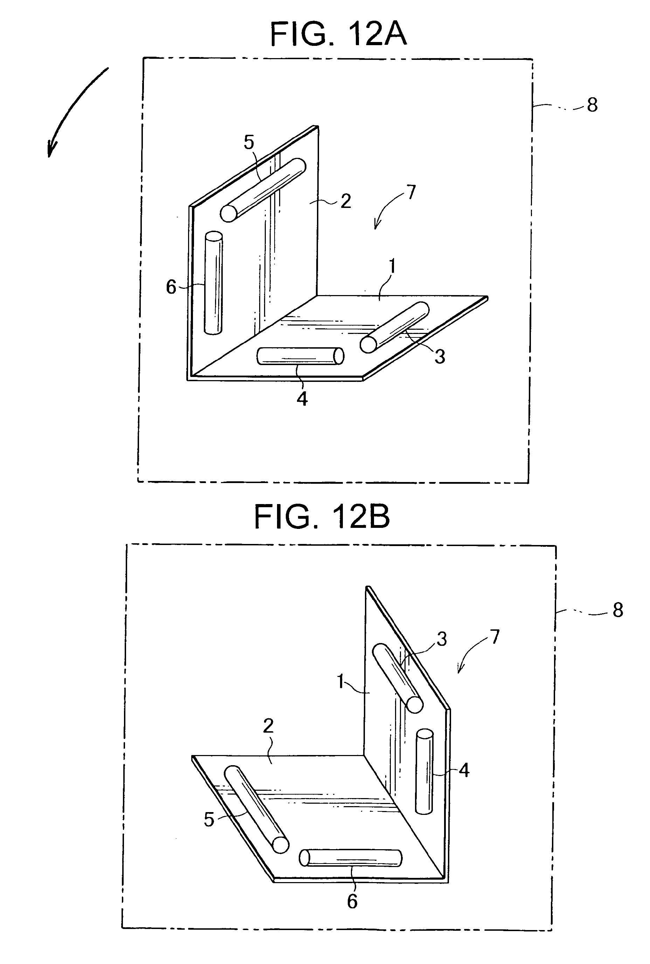

As a tilt detecting device 7 for detecting the tilting at two positions respectively, a device is known, which comprises, as shown in Fig. 12, tilt sensors, e.g. electric bubble tubes 3 and 4 or electric bubble tubes 5 and 6, perpendicularly crossing each other provided within planes of each of a horizontal plane 1 and a vertical plane. The following types of the electric bubble tubes are generally used: an electrostatic capacity type for detecting the changing electrostatic capacity depending on a position of an air bubble, and a resistance type which detects the changing of resistance which changes depending on a position of an air bubble.

In the figure, reference numeral 8 denotes a system where the tilt detecting device 7 is installed.

Fig. 12 (A) shows the system 8 in an erected state. In the erected state, tilting in two directions crossing perpendicularly each other of the horizontal plane 1 is detected by the electric bubble tubes 3 and 4 installed within the horizontal plane 1. The system 8 is leveled by compensating the tilting of the horizontal plane 1 so that each of the electric bubble tubes 3 and 4 detects the horizontality.

Fig. 12 (B) shows the system 8 in a horizontally laid state. In the horizontally laid state, the vertical plane 2 is kept in a horizontal position. By the electric bubble tubes 5 and 6 installed within the vertical plane 2, tilting in two directions perpendicularly crossing each other of the vertical plane 2 can be detected. The system 8 is leveled in the horizontally laid state by compensating the tilting of the vertical plane 2 so that each of the electric bubble tubes 5 and 6 detects the horizontality.

In the conventional type tilt detecting device as described above, two electric bubble tubes 3 and 4 and two electric bubble tubes 5 and 6 are needed for detecting the tilting in two installed positions of the system 8. An arithmetic operation unit is needed for detecting the tilting by calculating from the signal of the electric bubble tubes 3 and 4 as well as the electric bubble tubes 5 and 6. This means that there has been such problem that structure of the system is more complicated.

### SUMMARY OF THE INVENTION

It is an object of the present invention to provide a tilt detecting device, which has a simple structure and can detect tilting in two positions of a system where the tilt detecting device is installed.

To attain the above object, the present invention provides a tilt detecting device to be installed in a system where installation position is changed, wherein the tilt detecting device comprising at least one bubble tube, a light emitting element having an optical axis perpendicularly crossing an axis of the bubble tube and for emitting a light beam to pass through the bubble tube, and a photodetection element for receiving the light beam passing through the bubble tube, wherein tilting is detected based on photodetecting condition of the photodetection element, and the position of the system is changed in a direction rotating around the axis of the bubble tube. Also, the present invention provides the tilt detecting device as described above, wherein there are provided a light source having a light emitting element with an optical axis perpendicularly crossing the axis of the bubble tube and for emitting a light beam so that the light beam passes through the bubble tube, and a photodetection element for receiving the light beam passing through the bubble tube, wherein tilting is detected based on a position of an air bubble by the light beam passing through from under the bubble tube, and tilting is detected from the position of the air bubble by the light beam passing through from a lateral side of the bubble tube when the axis of the bubble tube is rotated by an angle of 90°. Further, the present invention provides the tilt detecting device as described above, wherein internal shape of the bubble tube is designed in form of a barrel, and tilting can be detected when the axis of the bubble tube is rotated by an angle of 90°. Also, the present invention provides the tilt detecting device as described above, wherein bubble tubes are provided in three directions perpendicularly crossing each other, there are provided a light emitting element and a photodetection element with respect to each of the bubble tubes, and the position of the system is changed in a direction rotating around the axis of one of the bubble tubes. Further, the present invention provides the tilt detecting device as described above, wherein the system where installation position is changed is a laser surveying instrument for projecting a laser beam and for forming a reference plane.

The present invention provides a tilt detecting device to be installed in a system where installation position is changed, wherein the tilt detecting device comprising at least one bubble tube, a light emitting element having an optical axis perpendicularly crossing an axis of the bubble tube and for emitting a light beam to pass through the bubble tube, and a photodetection element for receiving the light beam passing through the bubble tube, tilting is detected based on photodetecting condition of the photodetection element, and the position of the system is changed in a direction rotating around the axis of the bubble tube. As a result, by using a single tilt detecting device, tilting of the system where the tilt detecting device is installed can be detected in two positions.

### BRIEF DESCRIPTION OF THE DRAWINGS

Fig. 1 is a sectional elevation view of a first embodiment of the present invention;
Fig. 2 is an arrow diagram along a line A-A in Fig. 1;
Fig. 3 is an arrow diagram along a line B-B in Fig. 1;

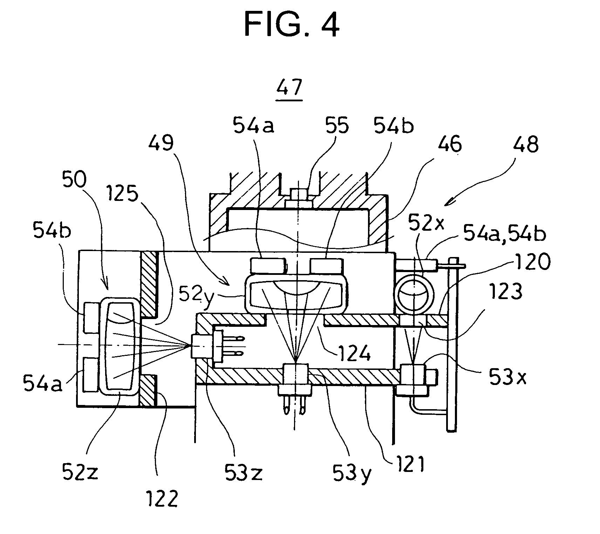

Fig. 4 is an enlarged view of a tilt detecting system;
Fig. 5 is a drawing to explain a remote controller;
Fig. 6 represents drawings, each used for explaining operating condition of the first embodiment. Fig. 6 (A) shows the laser irradiating system in erected state, and Fig. 6 (B) shows the laser irradiating system when the laser irradiating system is laid horizontally;
Fig. 7 is a sectional elevation view of the first embodiment when the laser irradiating system is laid at horizontal position;
Fig. 8 (A) and Fig. 8 (B) each represents a drawing to show operation of the tilt detecting system in the first embodiment;
Fig. 9 is a partial sectional elevation view of a second embodiment of the invention;
Fig. 10 is a sectional elevation view of a third embodiment of the invention when it is laid at horizontal position;
Fig. 11 is a sectional elevation view of a fourth embodiment of the invention when it is laid at horizontal position; and
Fig. 12 is a drawing to explain a conventional example;

### DETAILED DESCRIPTION OF THE PREFERRED EMBODIMENTS

Description will be given below on the best mode of the invention to carry out the present invention referring to the drawings.

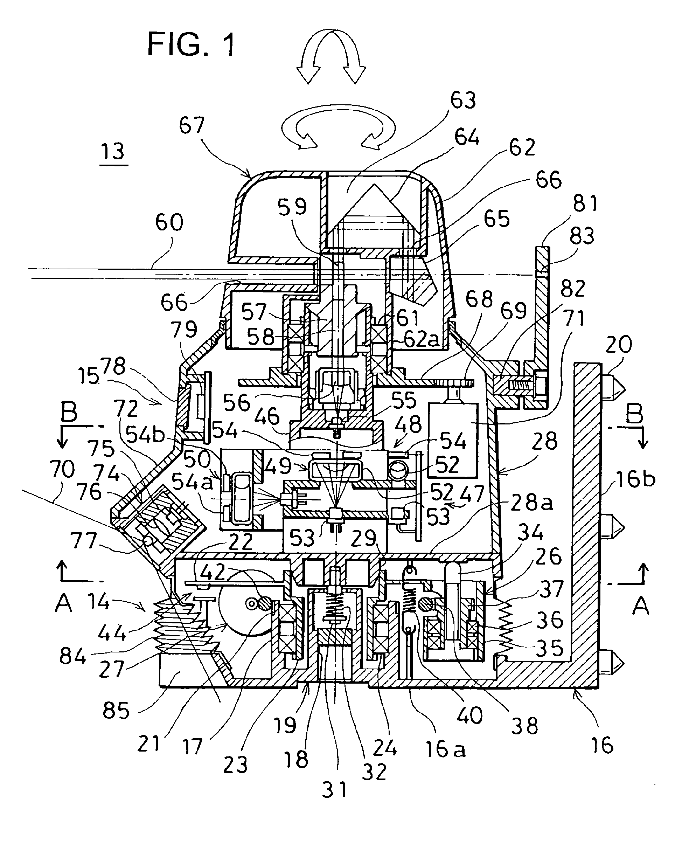

Fig. 1 to Fig. 3 each represents a case where the tilt detecting device according to the present invention is applied in a laser irradiating system 13.

A laser irradiating system 13 primarily comprises a leveling unit 14 and a main unit 15.

First, description will be given on the leveling unit 14.

A base 16 which is designed in approximately L-shaped form has a horizontal base plate 16a and a vertical base plate 16b which crosses perpendicularly to the horizontal base plate 16a. At about the center of the horizontal base plate 16a, a shaft support unit 19 in dual cylindrical shape and comprising an outer tube 17 and an inner tube 18 protruding upward is installed. A gear 21 is provided on an upper outer periphery of the outer tube 17, and an upper end of the inner tube 18 is closed. Three legs 20 are protruded from the vertical base plate 16b. When the laser irradiating system 13 standing at erected state as shown in Fig. 1 is laid down by an angle of 90°, the laser irradiating system 13 is supported via these three legs 20.

A leveling base plate 22 is arranged concentrically with the shaft support unit 19. At the center of the leveling base plate 22, a hollow rotation shaft 23 protruding downward is installed. The hollow rotation shaft 23 is rotatably engaged with the outer tube 17 via a bearing 24. An X-axis leveling unit 25 and a Y-axis leveling unit 26 are disposed along two radii of the leveling base plate 22 running perpendicularly to each other. A rolling compensation unit 27 is provided on a portion of the leveling base plate 22 not interfering with the X-axis leveling unit 25 and the Y-axis leveling unit 26.

The main unit 15 comprises a casing 28. On a lower surface of a bottom plate 28a of the casing 28, a spherical shaft 29 is protruded. The spherical shaft 29 is engaged with an upper end of the leveling base plate 22. The upper end of the leveling base plate 22 and the spherical shaft 29 make up together a spherical bearing unit, and the bottom plate 28a can be freely tilted in any direction as desired. A screw 31 penetrating the upper end of the inner tube 18 is screwed into the spherical shaft 29. A compression spring 32 is interposed between a head of the screw 31 and the upper end of the inner tube 18 so that the spherical shaft 29 is closely fitted to the upper end of the leveling base plate 22.

The X-axis leveling unit 25 comprises an X-axis rod 33, and the Y-axis leveling unit 26 comprises a Y-axis rod 34. Each of the X-axis rod 33 and the Y-axis rod 34 extends in a vertical direction. The X-axis rod 33 and the Y-axis rod 34 are abutted to a bottom surface of the bottom plate 28a. The bottom plate 28a is supported at three points, i.e. the upper end of the leveling base plate 22, the X-axis rod 33, and the Y-axis rod 34. A spring 40 is stretched from an intermediate position between the X-axis leveling unit 25 and the Y-axis leveling unit 26 to the horizontal base plate 16a, and the bottom plate 28a is pressed against the X-axis rod 33 and the Y-axis rod 34.

Because the X-axis leveling unit 25 has the same structure as the Y-axis leveling unit 26, description will be given here on the Y-axis leveling unit 26.

A holder unit 35 in cylindrical shape is provided vertically on the leveling base plate 22. In the holder unit 35, a worm wheel 37 is rotatably accommodated via a bearing 36. On a lower surface of the leveling base plate 22, a worm gear 38 is rotatably provided. The worm gear 38 is engaged with the worm wheel 37, and the Y-axis rod 34 is screwed into the center of the worm wheel 37. Although not shown in the figure, the Y-axis rod 34 is freely movable in an up-to-bottom direction while the Y-axis rod 34 is restrained from rotating. When the worm wheel 37 is rotated, the Y-axis rod 34 is displaced in a vertical direction.

An X-axis leveling motor 39 and a Y-axis leveling motor 41 are arranged on the leveling base plate 22, and an output shaft of the Y-axis leveling motor 41 is coupled with the worm gear 38 of the Y-axis leveling unit 26 by gear coupling. Similarly, an output shaft of the X-axis leveling motor 39 is coupled with a worm gear 38 of the X-axis leveling unit 25 by gear coupling.

Now, description will be given on the rolling compensation unit 27.

A worm gear 42 is rotatably disposed on a bottom surface of the leveling base plate 22, and a rolling compensation motor 43 is provided. An output shaft of the rolling compensation motor 43 is coupled with the worm gear 42 by gear coupling, and the worm gear 42 is engaged with the gear 21 of the outer tube 17. When the rolling compensation motor 43 is driven, the rolling compensation motor 43 is rotated around the outer tube 17. Further, the leveling base plate 22 is rotated, and the casing 28 is rotated integrally with the leveling base plate 22.

The driving of each of the X-axis leveling motor 39, the Y-axis leveling motor 41, and the rolling compensation motor 43 is controlled by a control unit 45 based on the results of tilting detected by an X-axis tilt detector 48, a Y-axis tilt detector 49, and a Z-axis tilt detector 50 respectively (to be described later).

A rotation amount limiting sensor 44 for limiting an amount of rotation of the leveling base plate 22 is disposed between the leveling base plate 22 and the horizontal base plate 16a. The rotation amount limiting sensor 44 detects the amount of rotation of the leveling base plate 22. When the amount of rotation from a standard position exceeds the allowable value, rotation of the rolling compensation unit 27 is stopped.

Now, description will be given on the main unit 15.

On an upper surface of the base plate 28a, a body tube 46 is protruded concentrically with the spherical shaft 29, and a tilt detecting unit 47 is disposed on a lower portion of the body tube 46.

The tilt detecting unit 47 comprises an X-axis tilt detector 48, a Y-axis tilt detector 49, and a Z-axis tilt detector 50. The X-axis tilt detector 48 and the Y-axis tilt detector 49 are arranged in directions running perpendicular to each other. The Z-axis tilt detector 50 is arranged in a direction perpendicular to the X-axis tilt detector 48 and the Y-axis tilt detector 49.

A first bubble tube holding plate 120 having a plane running perpendicular to an axis of the body tube 46 and having an L-shaped planar shape and a first light emitting element holding plate 121 running in parallel to the bubble tube holding plate 120 are mounted on the body tube 46. A second bubble tube holding plate 122 having a plane perpendicular to the first bubble tube holding plate 120 is mounted on the body tube 46.

On the first bubble tube holding plate 120, an X-axis slit 123 is formed in a direction perpendicular to the paper surface in Fig. 1, and a Y-axis slit 124 is formed in parallel to the paper surface in Fig. 1. Further, on the second bubble tube holding plate 122, a Z-axis slit 125 is formed in a direction perpendicular to the Y-axis slit 124 and in parallel to the paper surface in Fig. 1.

An X-axis bubble tube 52x is provided at a position opposite to the X-axis slit 123. An axis of the X-axis bubble tube 52x is included in a plane, which runs perpendicularly to the axis of the body tube 46. Photodetection elements 54a and 54b such as photodiodes are arranged respectively at positions opposite to both ends of the X-axis bubble tube 52x. On the light emitting element holding plate 121, a light emitting element 53x such as a light emitting diode (LED) is arranged at a position opposite to the X-axis slit 123. An optical axis of the light emitting element 53x runs in parallel to the axis of the body tube 46 and perpendicularly crosses the axis of the X-axis bubble tube 52x at the center.

The X-axis bubble tube 52x, the light emitting element 53x, and the photodetection elements 54a and 54b make up together the X-axis tilt detector 48.

A Y-axis bubble tube 52y is disposed at a position opposite to the Y-axis slit 124. An axis of the Y-axis bubble tube 52y is included in a plane, which runs perpendicularly to the axis of the body tube 46, and the axis of the Y-axis bubble tube 52y is extended in a direction perpendicular to the axis of the X-axis bubble tube 52x. Photodetection elements 54a and 54b such as photodiodes are arranged at positions opposite to both ends of the Y-axis bubble tube 52y. On the light emitting element holding plate 121, a light emitting element 53y such as a light emitting diode (LED) is disposed at a position opposite to the Y-axis slit 124. An optical axis of the light emitting element 53y runs in parallel to the axis of the body tube 46 and perpendicularly crosses the axis of the Y-axis bubble tube 52y at the center.

The Y-axis bubble tube 52y, the light emitting element 53y, and the photodetection elements 54a and 54b make up together the Y-axis tilt detector 49.

At a position opposite to the Z-axis slit 125, a Z-axis bubble tube 52z is disposed between the first bubble tube holding plate 120 and the light emitting element holding plate 121. An axis of the Z-axis bubble tube 52z runs in parallel to the axis of the body tube 46. At positions opposite to both ends of the Z-axis bubble tube 52z, photodetection elements 54a and 54b such as photodiodes are provided. On the light emitting element holding plate 121, a light emitting element 53z such as a light emitting diode (LED) is arranged at a position opposite to the Z-axis slit 125. An optical axis of the light emitting element 53z perpendicularly crosses the axis of the Z-axis bubble tube 52z at the center.

The Z-axis bubble tube 52z, the light emitting element 53z, and the photodetection elements 54a and 54b make up together the Z-axis tilt detector 50.

As described above, the X-axis tilt detector 48, the Y-axis tilt detector 49, and the Z-axis tilt detector 50 have the same structure. Each of these comprises the bubble tube 52, and the light emitting element 53 such as a light emitting diode (LED) and the photodetection elements 54a and 54b such as photodiodes, which are arranged so as to sandwitch the bubble tube 52. The photodetection elements 54a and 54b receive the light, which has passed through the bubble tube 52. Photodetection amounts of the photodetection elements 54a and 54b varies according to the position of an air bubble in the bubble tube 52 (i.e. tilting of the bubble tube 52). Photodetection signals corresponding to the photodetection amounts of the photodetection elements 54a and 54b are outputted. The photodetection signal is inputted to the control unit 45. The control unit 45 calculates a tilting direction and an amount of tilting based on deviation between the photodetection signals, and the tilting of the laser irradiating system 13 is detected.

When the laser irradiating system 13 is installed at standard position (erected state as shown in Fig. 1), the X-axis tilt detector 48 and the Y-axis tilt detector 49 detect tilting with respect to a horizontal plane. When the laser irradiating system 13 is laid down by an angle of 90°(i.e. in horizontally laid state), the X-axis tilt detector 48 and the Z-axis tilt detector 50 detect tilting with respect to the horizontal plane.

In the body tube 46, there are provided a first laser diode 55 for emitting a visible light (e.g. a green laser beam), and a first collimator lens 56 having the same optical axis as an optical axis of the first laser diode 55. The optical axis of each of the first laser diode 55 and the first collimator lens 56 concurs with the center line of the body tube 46.

On a hollow upper end portion of the body tube 46, a cylindrical lens holder 57 is disposed. At the center of the cylindrical lens holder 57, an optical path 58 concurring with the optical axis is formed. A first rod lens 59 is disposed at an upper end of the optical path 58, and a center line of the first rod lens 59 concurs with the optical axis.

An upper portion of the casing 28 is formed as a head case 62, and a cylindrical unit 62a is formed at the center of the head case 62. The cylindrical unit 62a is engaged on the upper end of the body tube 46 via a bearing 61. The head case 62 can be feely rotated with respect to the body tube 46. A rotary gear 68 is fixed on the cylindrical unit 62a. A driving gear 69 engaged with the rotary gear 68 can be rotated by a head rotating motor 71.

A recess 63 is formed on the head case 62. A corner cube prism 64 is disposed at a bottom of the recess 63. Inside the head case 62, a pentagonal prism 65 positioned adjacent to the corner cube prism 64 is accommodated via the bottom. In the head case 62, an optical path 66 is formed where a laser beam passes through.

A first laser beam 60 emitted from the first laser diode 55 passes through the first collimator lens 56 and is turned to parallel luminous fluxes. The luminous fluxes pass along the center line of the first rod lens 59 and are reflected in parallel by the corner cube prism 64 and is reflected in a perpendicular direction by the pentagonal prism 65. Then, the parallel luminous fluxes pass through the first rod lens 59 in a direction perpendicular to the center line of the first rod lens 59. When the luminous fluxes pass through the first rod lens 59, the fluxes are diffused only in a horizontal direction, and a laser beam in fan-like shape is irradiated from the head case 62.

The first laser diode 55, the first collimator lens 56 and the first rod lens 59 make up together a first light emitting unit. The corner cube prism 64 and the pentagonal prism 65 make up together a first irradiation optical system. The head case 62, the corner cube prism 64, and the pentagonal prism 65 make up together a rotary head 67.

On the lower portion of the casing 28 and on a side opposite to the vertical base plate 16b, a line laser light emitting unit 72 is provided. A second light emitting unit 74 is accommodated in the line laser light emitting unit 72.

The second light emitting unit 74 comprises a second laser diode 75, a second collimator lens 76, and a second rod lens 77. The second laser diode 75 emits a visible light (e.g. a red laser beam). The laser beam crosses a reference plane formed by the first laser beam at a sharp angle (e.g. at 45°), and the laser beam has an optical axis extended in an obliquely downward direction. The second rod lens 77 has an optical axis, which perpendicularly crosses the optical axis of the laser beam and is extended in a horizontal direction.

A second laser beam 70 projected from the second laser diode 75 is turned to parallel luminous fluxes by the second collimator lens 76. When the luminous fluxes pass through the second rod lens 77, and the fluxes are diffused only in a vertical direction, and a laser beam in fan-like shape is irradiated.

A signal light receiving window 78 is disposed at an upper portion of the line laser light emitting unit 72 of the casing 28, and a signal light photodetector 79 is provided at a position opposite to the signal light receiving window 78. A photodetection signal at the signal light photodetector 79 is sent to the control unit 45. The control unit 45 detects a communication signal in the photodetection signal from the signal light photodetector 79 and changes an irradiating direction of the first laser beam 60 by driving and controlling the head rotating motor 71.

At a position on the casing 28 opposite to the vertical base plate 16b, an alignment bar 81 is rotatably arranged around a horizontal axis via a rotation shaft 82. The alignment bar 81 has such a mechanism that the position of the alignment bar 81 is held respectively at an alignment position shown in Fig. 1 and at a storage position rotated by an angle of 180°from the alignment position. At a forward end of the alignment bar 81, a laser beam finder 83 is provided. When the alignment bar 81 is at the alignment position, the laser beam finder 83 is positioned within the horizontal plane formed by the first laser beam 60, and the laser beam finder 83 has the center line which perpendicularly crosses the center line of the first rod lens 59.

Between the bottom plate 28a and the horizontal base plate 16a, dustproof bellows 84 are provided. A recess 85 is formed on the bellows 84 and the horizontal base plate 16a so that the interference with the second laser beam 70 can be prevented.

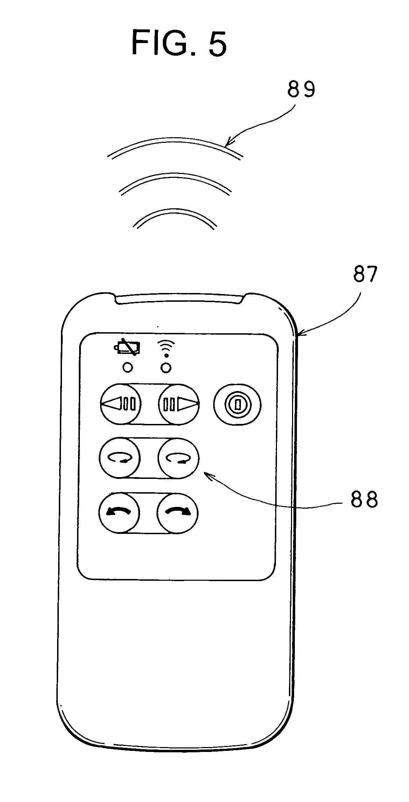

Fig. 5 shows a remote controller 87. The remote controller 87 can project a signal light 89 with superimposed communication signals by means such as modulation. The remote controller 87 has an operation button 88. Through the operation of the operation button 88, required operation can be carried out such as driving or stopping of the laser irradiating system 13, rotation of the rotary head 67, tilting of the main unit 15, etc.

Description will be given below on operation.

As shown in Fig. 1, the laser irradiating system 13 is installed in erected state and driving is started, and leveling operation by the leveling unit 14 is initiated. In the erected state, the laser beam finder 83 is kept in storage condition so that interference with the first laser beam 60 does not occur.

In the erected state, the results of tilt detection from the X-axis tilt detector 48 and the Y-axis tilt detector 49 are inputted to the control unit 45, and the X-axis leveling unit 25 and the Y-axis leveling unit 26 are operated so that the X-axis tilt detector 48 and the Y-axis tilt detector 49 detect the horizontality.

For instance, a tilting direction and an amount of tilting with respect to the Y-axis are detected according to signals from the photodetection elements 54a and 54b of the Y-axis tilt detector 49, and the Y-axis leveling unit 26 is operated. The Y-axis leveling motor 41 is driven by the control unit 45. The worm wheel 37 is rotated via the worm gear 38 by the driving of the Y-axis leveling motor 41. When the worm wheel 37 is rotated, the Y-axis rod 34 is displaced in a vertical direction. By the vertical displacement of the Y-axis rod 34, the bottom plate 28a is tilted with its center on a virtual line, which connects the spherical shaft 29 with the X-axis rod 33.

Similarly, based on detection results of the X-axis tilt detector 48, the X-axis leveling unit 25 is operated. The bottom plate 28a is tilted with its center on a virtual line, which connects the spherical shaft 29 with the Y-axis rod 34.

By the operation of the X-axis leveling unit 25 and the Y-axis leveling unit 26, the bottom plate 28a is leveled at the horizontal position.

When the bottom plate 28a is leveled at the horizontal position, the optical axis of the first laser diode 55 is adjusted in a vertical direction. Further, the corner cube prism 64 reflects the light in parallel with respect to the incident light, and the pentagonal prism 65 reflects the light in a direction perpendicular to the incident light. The first laser beam 60 in fan-like shape irradiated from the rotary head 67 is irradiated in a horizontal direction and with horizontal spreading. As a result, a horizontal reference plane is formed, and the laser beam projected to a wall surface, etc. forms a horizontal reference line.

The second laser beam 70 irradiated from the second light emitting unit 74 has spreading in a vertical direction. The second laser beam 70 forms a vertical reference plane, and the laser beam projected to a wall surface, etc. forms a vertical reference line.

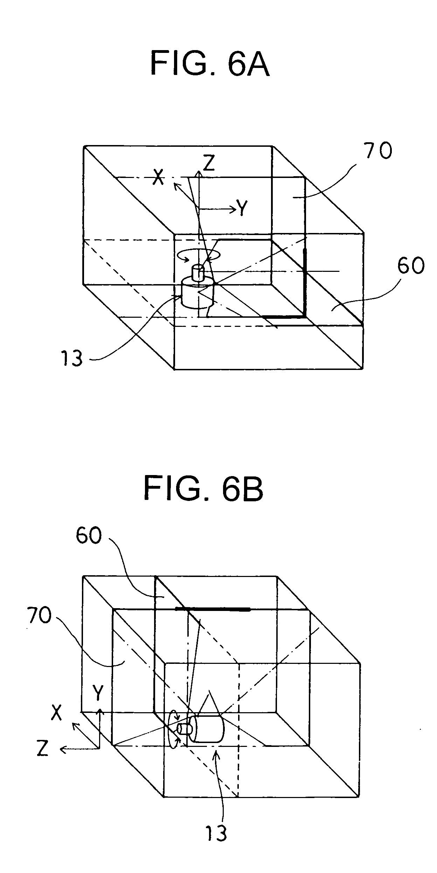

Irradiating state of each of the first laser beam 60 and the second laser beam 70 is shown in Fig. 6 (A). The irradiated first laser beam 60 and the second laser beam 70 are laser beams in fan-like shape and provide partial irradiation. Thus, high brightness can be kept and visibility is high. The horizontal reference line is in green, and the vertical reference line is in red. Thus, it is easy to discriminate these reference lines from each other and working efficiency can be improved.

When the irradiating direction of the first laser beam 60 is to be changed, a command for the change is issued from the remote controller 87. The signal light 89 is received by the signal light photodetector 79 via the signal light receiving window 78. By the control unit 45, the communication signal is calculated and extracted, and the head rotating motor 71 is driven. When the head rotating motor 71 is driven, the head case 62 is rotated via the driving gear 69 and the rotary gear 68, and the irradiating direction of the first laser beam 60 is changed.

Even when the rotation of the head case 62 is accompanied with fluctuation and vibration, the condition that the first laser beam 60 perpendicularly crosses the optical axis of the first laser diode 55 is guaranteed by the corner cube prism 64 and the pentagonal prism 65. Thus, fluctuation, oscillation, etc. of the first laser beam 60 do not occur.

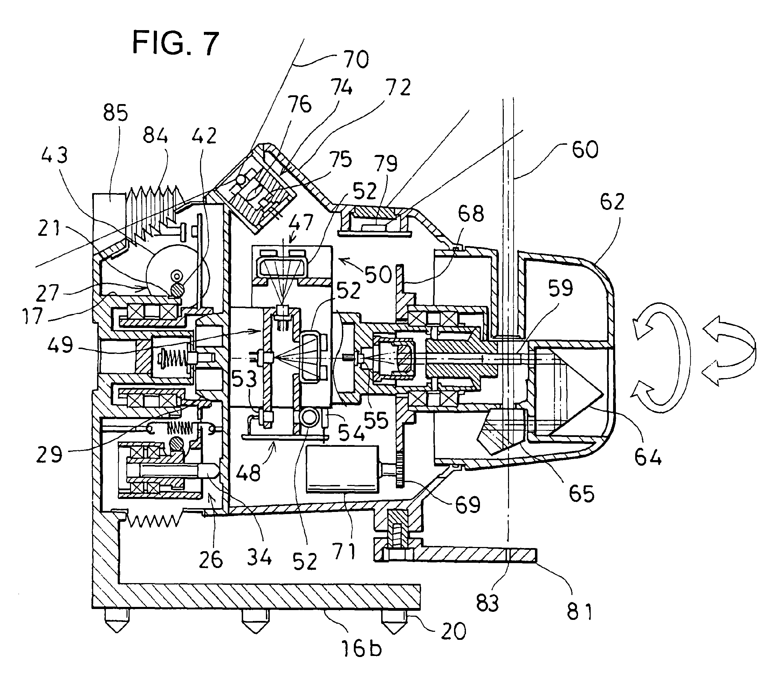

Fig. 7 shows the laser irradiating system 13 when the laser irradiating system 13 is installed by being laid down by an angle of 90°(horizontally laid state).

In the horizontally laid state, two vertical planes perpendicularly crossing each other can be formed as shown in Fig.6(B).

When the laser irradiating system 13 is laid horizontally, the alignment bar 81 is pulled out. When the first laser beam 60 is irradiated in a downward direction under this state, the laser beam passing through the laser beam finder 83 is projected to a floor surface as a point. The projected point can be used as a reference point when the laser irradiating system 13 is installed, and the laser irradiating system 13 can be installed quickly and with high accuracy.

When the laser irradiating system 13 is driven, leveling operation by the leveling unit 14 is initiated. When the laser irradiating system 13 is laid horizontally, leveling operation is performed based on detection signals from the Z-axis tilt detector 50 and the X-axis tilt detector 48.

The Y-axis leveling unit 26 is operated so that the detection signal from the Z-axis tilt detector 50 indicates the horizontality, and the rolling compensation unit 27 is operated so that the X-axis tilt detector 48 indicates the horizontality.

When the rolling compensation motor 43 is driven, the worm gear 42 is rotated. Because the gear 21 is formed on the outer tube 17 which is fixed, the rolling compensation motor 43 is rotated integrally with the bottom plate 28a. When the X-axis tilt detector 48 detects the horizontality, a reference plane formed by the second laser beam 70 is set in a vertical direction. When the Z-axis tilt detector 50 detects the horizontality, the reference plane formed by the first laser beam 60 is set in a vertical direction.

The irradiating direction of the first laser beam 60 can be changed by the remote controller 87 similarly to the case of the erected state.

Next, description will be given on an aspect where the X-axis tilt detector 48 is used.

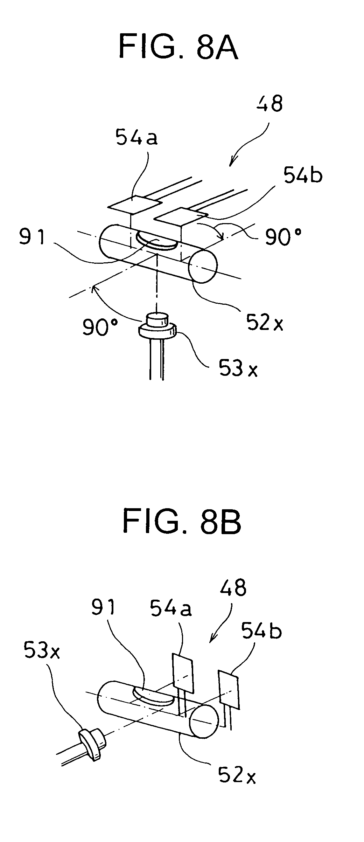

Fig. 8 (A) shows a case where the laser irradiating system 13 is in the erected state. An air bubble 91 in the bubble tube 52x is at a position to face to the photodetection elements 54a and 54b. A liquid surface formed by the air bubble 91 runs almost perpendicularly to an optical axis of the light emitting element 53x. A light from the light emitting element 53x is interrupted depending on the position of the air bubble 91 or the light is reflected by the liquid surface and is refracted. Thus, amounts of the lights reaching the photodetection elements 54a and 54b varies accordingly. Therefore, by obtaining the difference of the amounts of the lights between the photodetection elements 54a and 54b, it is possible to detect the position of the air bubble 91, i.e. the tilting direction and the amount of tilting.

Fig. 8 (B) represents the condition where the laser irradiating system 13 is in horizontally laid state. In this case, the X-axis bubble tube 52x is rotated at an angle of 90°around the axis with respect to the X-axis tilt detector 48. However, the bubble tube is designed in form of a barrel, in which any cross-section is in form of a regular circle, and the direction of the axis is not changed.

In the X-axis bubble tube 52x, the air bubble 91 is rotated at an angle of 90°around the axis of the X-axis bubble tube 52x from the erected state. Then, the air bubble 91 is turned to a position deviated by an angle of 90°from the photodetection elements 54a and 54b, i.e. the liquid surface is turned to a direction approximately parallel to the optical axis of the light emitting element 53. In this case, the total amount of the light received by the photodetection elements 54a and 54b is higher than the amount of the light received in case of the erected state. The light from the light emitting element 53 is interrupted depending on the position of the air bubble 91 or the light is reflected by the liquid surface and is refracted. As a result, the amount of the light reaching the photodetection elements 54a and 54b is changed. By obtaining a difference between the amounts of the lights received by the photodetection elements 54a and 54b, it is possible to detect the position of the air bubble 91, i.e. the tilting direction and the amount of tilting.

The X-axis tilt detector 48 detects tilting in two states, i.e. the erected state and the horizontally laid state, of the laser irradiating system 13.

In the tilt detecting device 47, if it is required to detect the horizontality only in one direction in the erected state or in the horizontally laid state, the Y-axis tilt detector 49 and the Z-axis tilt detector 50 may not be used.

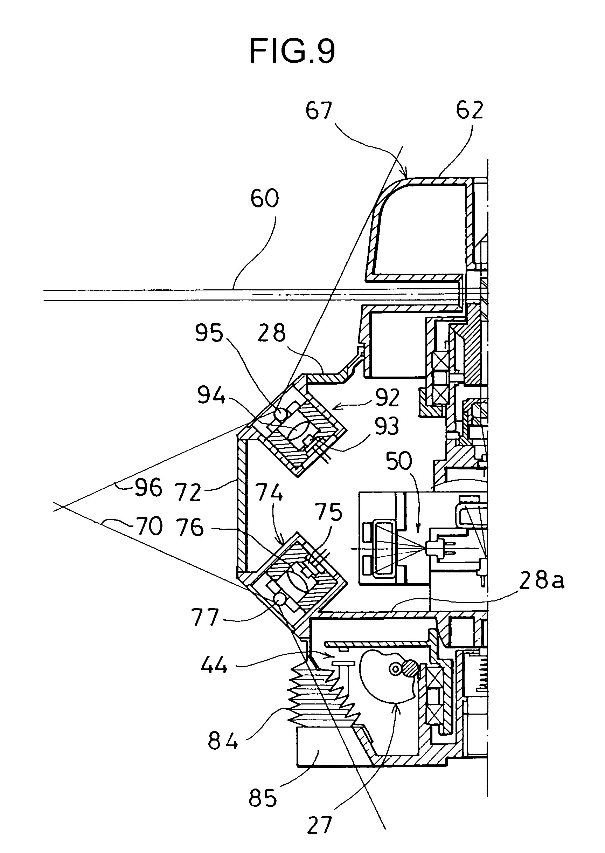

Fig. 9 shows a second embodiment of the present invention. In the second embodiment, a third light emitting unit 92 having a structure similar to the structure of the second light emitting unit 74 is provided.

The line laser light emitting unit 72 is formed so that two inclined surfaces are formed above and under. On a lower inclined surface, the second light emitting unit 74 is disposed, and the third light emitting unit 92 is arranged on an upper inclined surface. The third light emitting unit 92 comprises a third laser diode 93, a third collimator lens 94, and a third rod lens 95, and it has the same arrangement as the arrangement of the second light emitting unit 74.

The optical axis of the second laser diode 75 is on the same plane as an optical axis of the third light emitting unit 92. These two optical axes cross each other at a predetermined angle, e.g. at an angle of 90°, and a center line of the third rod lens 95 is in parallel to a center line of the second rod lens 77. A laser beam 70 in fan-like shape irradiated from the second light emitting unit 74 and a third laser beam 96 in fan-like shape irradiated from the third light emitting unit 92 are included in the same plane. Therefore, the second laser beam 70 and the third laser beam 96 form a continuous reference plane. Thus, it is possible to maintain high brightness and to form a reference plane for a wide range.

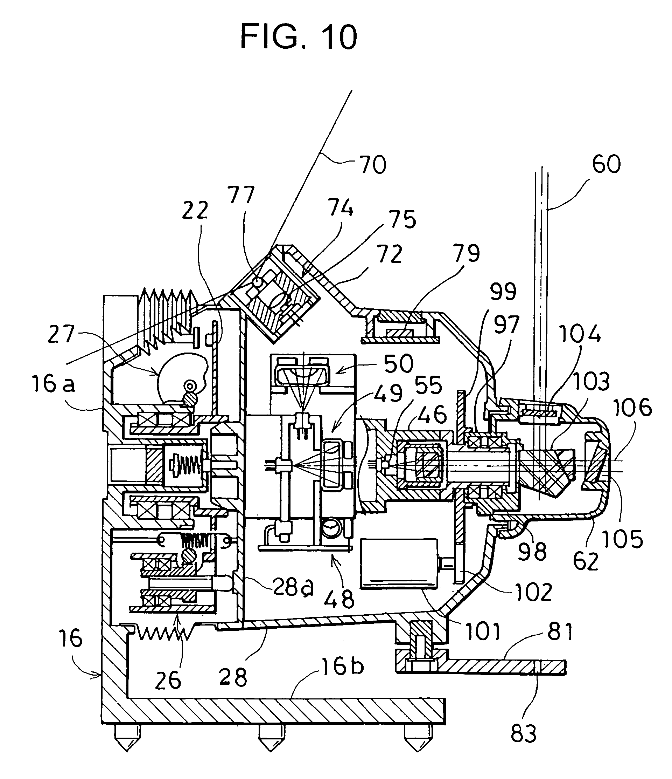

Fig. 10 shows a third embodiment of the present invention.

In the third embodiment, a reference plane is formed by projecting the first laser beam 60 in rotary irradiation. In Fig. 10, the equivalent component as shown in Fig. 1 is referred by the same symbol, and detailed description is not given here.

At a forward end of the body tube 46, a rotating body 97 is rotatably mounted via a bearing 98. On the rotating body 97, a scanning rotary gear 99 is disposed. The scanning rotary gear 99 is rotated by a scanning motor 101 via a scanning driving gear 102.

On the rotating body 97, a pentagonal prism 103 is disposed on the optical axis of the first laser diode 55, and a head case 62 to accommodate the pentagonal prism 103 is disposed. In the head case 62, there are provided a first irradiation window 104, which transmits the first laser beam 60 deflected by the pentagonal prism 103, and a second irradiation window 105, which transmits a fourth laser beam 106 divided by the pentagonal prism 103.

The first laser beam 60 projected from the first laser diode 55 is deflected to a direction perpendicular to the optical axis of the first laser diode 55 by the pentagonal prism 103 and is irradiated through the first irradiation window 104. When the scanning motor 101 is driven and the pentagonal prism 103 is rotated via the scanning driving gear 102 and the scanning rotary gear 99, the first laser beam 60 is projected in rotary irradiation, and a reference plane is formed. After passing through the second irradiation window 105, the fourth laser beam 106 is irradiated on the optical axis of the first laser diode 55, and a reference line is formed.

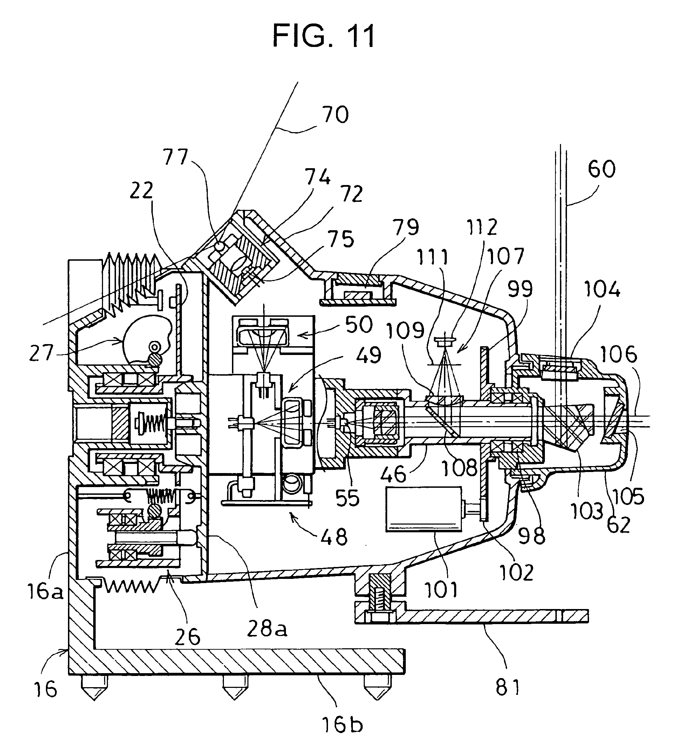

Fig. 11 represents a fourth embodiment of the present invention.

In the fourth embodiment, visibility of the reference plane and the reference line formed by the first laser beam 60 is increased compared with the third embodiment. In Fig. 11, the equivalent component as shown in Fig. 10 is referred by the same symbol, and detailed description is not given here.

Compared with the third embodiment, a photodetector 107 is further provided and an object reflector (not shown) is used in the fourth embodiment. The laser irradiating system 13 detects the object reflector. Reciprocal scanning is performed for a predetermined range around the object reflector. Apparent brightness of the irradiated laser beam is increased, and visibility is improved.

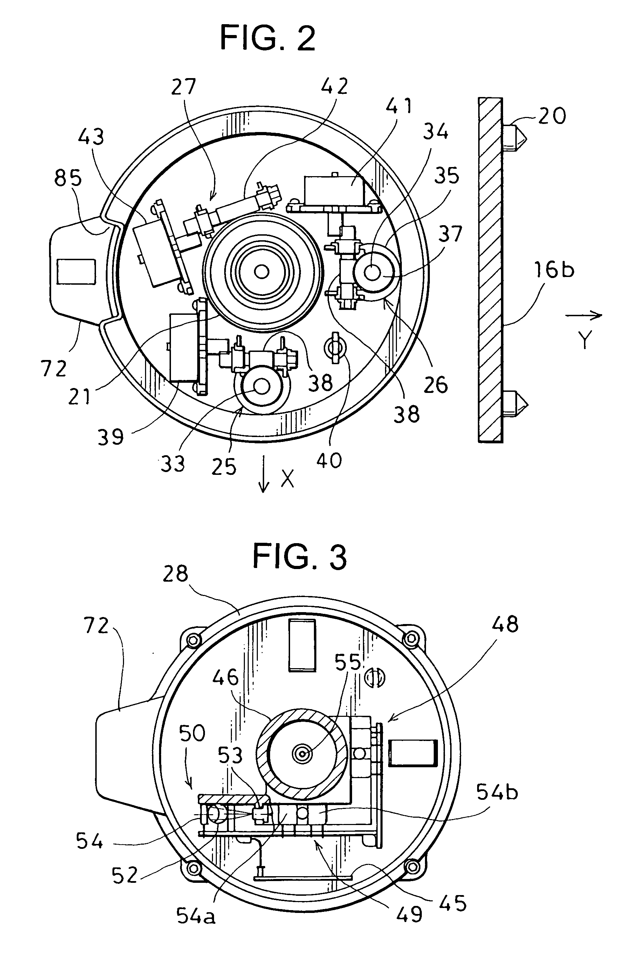

An aperture mirror (perforated mirror) 108 is disposed at a predetermined position in the body tube 46. On a reflection optical axis of the aperture mirror 108, there are provided a condenser lens 109, a polarizing plate 111, and a photodetection element 112. A photodetection signal of the photodetection element 112 is sent to the control unit 45 (See Fig. 3).

By scanning the first laser beam 60, the first laser beam 60 passes through the object reflector, the first laser beam 60 is reflected by the object reflector. The reflected light passes through the first irradiation window 104 and the pentagonal prism 103. The reflected light is further reflected by the aperture mirror 108 and is converged by the condenser lens 109 and is received by the photodetection element 112. The photodetection element 112 sends a photodetection signal to the control unit 45. The control unit 45 detects the irradiation direction of the first laser beam 60 when the photodetection element 112 receives the light and stores the data. Then, the scanning motor 101 is driven and controlled so that the first laser beam 60 is projected for reciprocal scanning within a predetermined angle around the detected irradiating direction. The polarizing plate 111 is arranged so as to have the direction of polarization aligned with a polarizing plane of the received reflection light. The polarizing plate 111 cuts off noise light included in the incident reflection light, and this contributes to the improvement of accuracy to discriminate the object reflector.

## Claims

1. A tilt detecting device to be installed in a system where installation position is changed, **characterized in that** said tilt detecting device comprising at least one bubble tube, a light emitting element having an optical axis perpendicularly crossing an axis of said bubble tube and for emitting a light beam to pass through said bubble tube, and a photodetection element for receiving the light beam passing through said bubble tube, wherein tilting is detected based on photodetecting condition of said photodetection element, and the position of said system is changed in a direction rotating around the axis of said bubble tube.

2. A tilt detecting device according to claim 1, wherein there are provided a light source having a light emitting element with an optical axis perpendicularly crossing the axis of said bubble tube and for emitting a light beam so that the light beam passes through said bubble tube, and a photodetection element for receiving the light beam passing through said bubble tube, wherein tilting is detected based on a position of an air bubble by the light beam passing through from under said bubble tube, and tilting is detected from the position of the air bubble by the light beam passing through from a lateral side of the bubble tube when the axis of said bubble tube is rotated by an angle of 90°.

3. A tilt detecting device according to claim 2, wherein internal shape of said bubble tube is designed in form of a barrel, and tilting can be detected when the axis of said bubble tube is rotated by an angle of 90°.

4. A tilt detecting device according to claim 1, wherein bubble tubes are provided in three directions perpendicularly crossing each other, there are provided a light emitting element and a photodetection element with respect to each of said bubble tubes, and the position of said system is changed in a direction rotating around the axis of one of said bubble tubes.

5. A tilt detecting device according to claim 1, wherein the system where installation position is changed is a laser surveying instrument for projecting a laser beam and for forming a reference plane.
